# EUROPEAN PATENT APPLICATION

(11) **EP 1 753 012 A2**
(43) Date of publication of application: **14.02.2007**
(21) Application number: 06114382.2
(22) Date of filing: 23.05.2006
(51) Int. Cl.: H01J 61/30, H01J 61/067, H01J 65/04, H05B 41/14

(54) **Flat fluorescent lamp and backlight unit having the same**

(30) Priority: 23.05.2005 KR 20050043080
(71) Applicant: Samsung Corning Co., Ltd, Suwon-si, Gyeonggi-do 443-732 (KR)
(72) Inventor: Park, Jae Seok, Seongbok-dong Yongin449-530, Gyeonggi-do (KR); Lee, Ki Yeon, 443-756, Gyeonggi-do (KR); Cho, Seok Hyun, 143-769, Seoul (KR); Kim, Hyun Sook, 142-816, Seoul (KR)
(74) Representative: Hengelhaupt, Jürgen

(57) **Abstract**

A flat fluorescent lamp 110, 120, 130, 140, 150 includes a main body having an inner space into which discharge gas is provided, the inner space being partitioned into a plurality of discharge channels 115, 125, 135, 145, 155, and the discharge channels 115, 125, 135, 145, 155 extending in a first direction, and an electrode 119, 129, 139, 149, 159 for applying discharge voltage to each discharge channel 115, 125, 135, 145, 155, the electrode 119, 129, 139, 149, 159 extending in a second direction which intersects the first direction. The outermost discharge channel disposed at an outermost place among a plurality of the discharge channels 115, 125, 135, 145, 155 has a larger volume than the central discharge channel disposed at a central place among a plurality of the discharge channels 115, 125, 135, 145, 155.

## Description

### Background of the Invention

### 1. Field of the Invention

The present invention relates to a flat fluorescent lamp with improved luminance uniformity and a backlight unit having the same.

### 2. Description of the Background Art

An LCD (liquid crystal display) device displays images utilizing the electric and optical characteristics of LC (liquid crystal). An LCD device has many advantages of small thickness and lightness in comparison with other display devices such as a cathode ray tube (CRT). Thus, an LCD device has been widely used in various products, such as a mobile computer, a communication device, a liquid crystal TV, an airplane, etc.

An LCD device generally includes an LC controlling unit and a backlight unit supplying the liquid crystal with a light. The LC controlling unit includes pixel electrodes disposed on a first panel, a common electrode disposed on a second panel and an LC disposed between the first and second panels. Each of the pixel electrodes is connected to a thin film transistor to receive a pixel voltage, and an equal level of reference voltage is applied to the common electrode. The pixel electrodes and the common electrode are made of a transparent and conductive material.

The light emitted from the backlight unit passes sequentially through the pixel electrode, the LC and the common electrode. The quality of image displayed on an LCD device may be largely influenced by the luminance characteristics of the backlight unit. Typically, high luminance and luminance uniformity improve the image quality of an LCD device.

The conventional backlight unit generally has used a cold cathode fluorescent lamp (CCFL) or a light emitting diode (LED). The CCFL shows high luminance and long lifetime and generates a small amount of heat compared to an incandescent lamp. The LED has high power consumption but high luminance. However, the CCFL or the LED has poor luminance uniformity. Therefore, the conventional backlight unit has to be provided with additional optical members such as a light guide panel, a diffusion sheet and a prism sheet to improve its luminance uniformity The addition of the optical members inevitably leads to the increase of the size and weight of the backlight unit.

To solve the aforementioned problems, a flat fluorescent lamp was developed. A flat fluorescent lamp can be divided into a lamp with barriers provided independently from a panel and a lamp with barriers integrally formed on a panel.

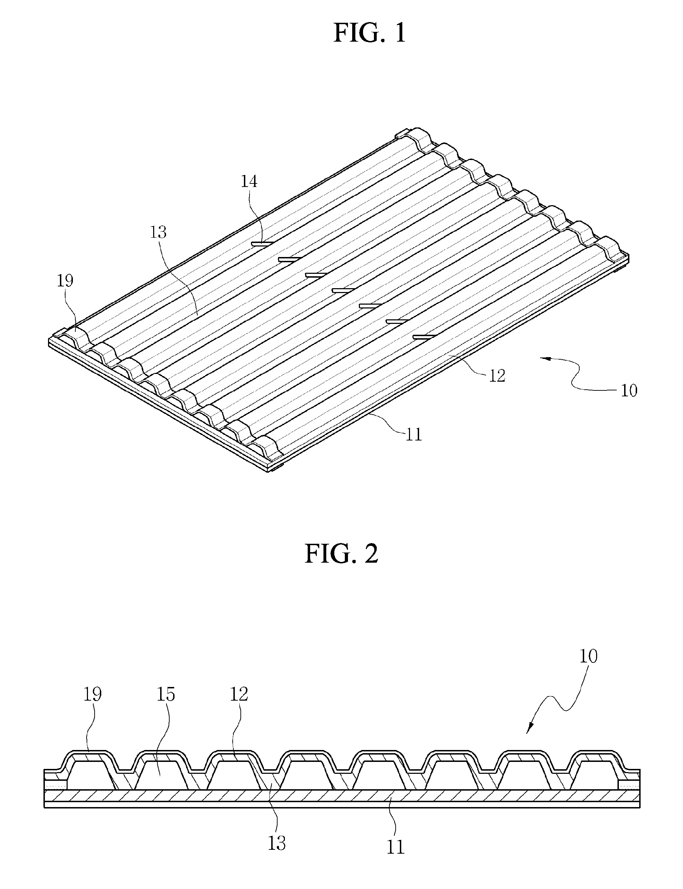

Fig. 1 is a perspective view illustrating a conventional flat fluorescent lamp 10 whose barriers 13 are integrally formed on a panel 12. Fig. 2 is a cross-sectional view illustrating the flat fluorescent lamp 10 of Fig. 1.

As shown in Fig. 1, the flat fluorescent lamp 10 includes a main body and electrodes 19.

The main body includes two panels 11, 12 disposed at a lower place and an upper place respectively. The panel 11 disposed at the lower place has a plate shape. The panel 12 disposed at the upper place has the barriers 13 integrally formed thereon. The barriers 13 partition an inner space of the main body into a plurality of discharge channels. A cross-section of the panel 12 has a shape of continuous trapezoids.

The electrodes 19 are formed on both sides of the main body. The electrode 19 applies discharge voltage to each discharge channel 15. A fluorescent layer is formed on inner surfaces of the discharge channels 15. The barriers 13 extend in a first direction. The electrodes 19 for applying the discharge voltage to discharge gas extend in a second direction on both sides of outer surfaces of the panels 11, 12. The second direction intersects the first direction at a right angle

The electrode 19 is provided in the form of tape, spray, powder, etc. The discharge gas includes mercury, an inert gas, etc.

An unexplained reference numeral 14 represents passages through which the discharge gas moves to be injected into each discharge channel 15.

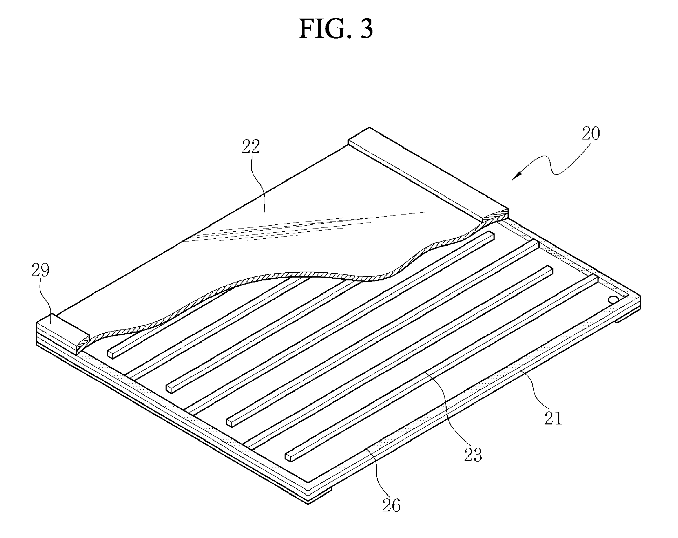

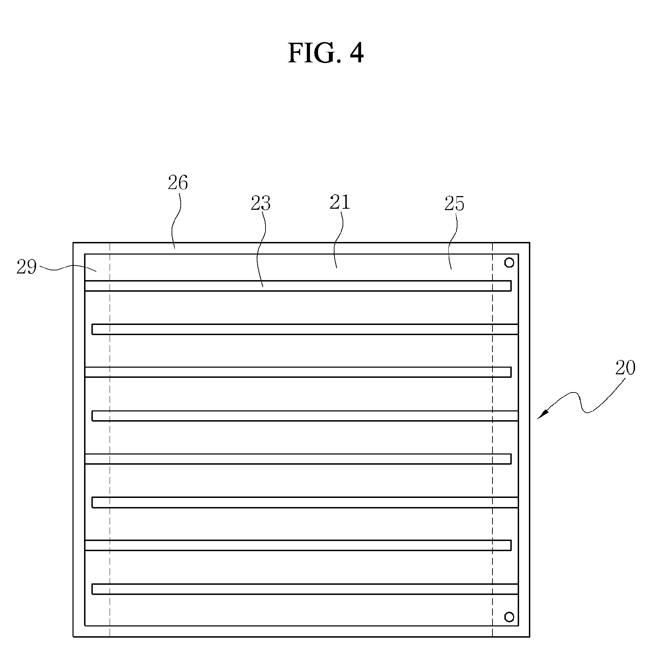

Fig. 3 is a partially sectioned perspective view illustrating another conventional flat fluorescent lamp 20. Fig. 4 is a cross-sectional view illustrating the flat fluorescent lamp 20 of Fig. 3. A panel 22 is not shown in Fig. 4.

As shown in Fig. 3, the flat fluorescent lamp 20 is a lamp whose barriers are provided independently from a panel. The lamp 20 includes a main body and electrodes 29.

The main body includes two panels 21, 22 disposed at a lower place and an upper place respectively, barriers 23, and a sealing member 26.

The barriers 23 are arranged parallel with one another between the two panels 21, 22. The barriers 23 partition an inner space of the main body into a plurality of discharge channels 25.

The sealing member 26 is formed between the two panels 21, 22 along peripheries of the panels 21, 22 to isolate the inner space of the main body from the outside.

Discharge gas is injected into the inner space. The barriers 23 extend in a first direction. The electrodes 29 for applying discharge voltage to the discharge gas extend in a second direction on both sides of outer surfaces of the panels 11, 12. The second direction intersects the first direction at a right angle.

The discharge channels 25 are connected to one another and thus the discharge gas can be uniformly injected into each discharge channel 25. The discharge channels 25 are arranged alternately in the serpentine formation.

A fluorescent layer is formed on inner surfaces of the discharge channels 25.

In the flat fluorescent lamps 10, 20 of Figs. 1 to 4, when the discharge voltage is applied to the electrodes 19, 29, electric discharge arises in the discharge channels 15, 25 and as a result ultraviolet ray is emitted. Then, the emitted ultraviolet ray excites the fluorescent layer to generate visible ray.

However, the above conventional flat fluorescent lamps 10, 20 have a problem that the outermost discharge channel among a plurality of the discharge channels 15, 25 has poor luminance uniformity as compared to the central discharge channel.

In the conventional flat fluorescent lamps 10, 20, the discharge channels 15, 25 have the same volume and thus they are provided with the same amount of the discharge gas.

In the flat fluorescent lamps, a large area of the outer surface is exposed to the outside and thus the flat fluorescent lamps are more easily influenced by environment than other type lamps, for example, a CCFL, an EEFL, etc. Accordingly, the outermost discharge channel loses a larger amount of heat than the central discharge channel. As a result, a temperature difference arises between the outermost discharge channel and the central discharge channel. Especially, mercury used as the discharge gas is very sensitive to temperature. Therefore, after the flat fluorescent lamps works for many hours, the temperature difference becomes bigger. Such temperature difference causes non-uniformity of luminance in the lamps.

Moreover, a cold spot can be created in the outermost discharge channel which has a lower temperature than the central discharge channel. The cold spot tends to continuously absorb mercury. As a result, discoloration can arise and life of the lamps can decrease.

In addition, light overlap is relatively small over the outermost discharge channel in comparison with the central discharge channel, while leakage of current is relatively large at the outermost discharge channel. Accordingly, the outermost discharge channel has a lower luminance than the central discharge channel.

### Summary of the Invention

Therefore, an object of the present invention is to solve the problem of non-uniformity in luminance between discharge channels and as a result, to provide a flat fluorescent lamp with improved luminance uniformity and a backlight unit having the same.

To achieve the above-mentioned object, the present invention provides a flat fluorescent lamp comprising: a main body having an inner space into which discharge gas is provided, the inner space being partitioned into a plurality of discharge channels, and the discharge channels extending in a first direction, and an electrode for applying discharge voltage to each discharge channel, the electrode extending in a second direction which intersects the first direction, the outermost discharge channel disposed at an outermost place among a plurality of the discharge channels having a larger volume than the central discharge channel disposed at a central place among a plurality of the discharge channels.

For example, as the discharge channels go from the central place to the outermost place, a volume of each discharge channel increases continuously or stepwise,

Preferably, an outermost part of the electrode at the outermost discharge channel has a larger area than a central part of the electrode at the central discharge channel.

For example, as the electrode goes from the central part to the outermost part, an area of each part of the electrode at each discharge channel increases continuously or stepwise. According to an embodiment, the main body has a first zone at a middle place and a second zone at two outer places, volumes of the discharge channels disposed in the first zone are identical to one another, volumes of the discharge channels disposed in the second zone are identical to one another and are larger than the volumes of the discharge channels disposed in the first zone, a total volume of the discharge channels disposed in the first zone is 80 ∼ 85% of a total volume of the inner space of the main body, and a total volume of the discharge channels disposed in the second zone is 15 - 20% of the total volume of the inner space of the main body.

Preferably, the outermost discharge channel has a larger cross-sectional area than the central discharge channel.

For example, the outermost discharge channel has a larger width and/or a larger height than the central discharge channel.

Preferably, the main body includes two panels disposed at an upper place and a lower place respectively, and barriers partitioning the inner space of the main body into a plurality of the discharge channels.

In a lamp with barriers integrally formed on a panel, the barriers are integrally formed on the panel. In a lamp with barriers provided independently from a panel, the main body includes a sealing member which is formed between the two panels along peripheries of the panels to form the inner space.

In addition, the present invention provides a backlight unit comprising: a flat fluorescent lamp including a main body having an inner space into which discharge gas is provided, the inner space being partitioned into a plurality of discharge channels, and the discharge channels extending in a first direction, and an electrode for applying discharge voltage to each discharge channel, the electrode extending in a second direction which intersects the first direction, the outermost discharge channel disposed at an outermost place among a plurality of the discharge channels having a larger volume than the central discharge channel disposed at a central place among a plurality of the discharge channels; an upper case and a lower case for receiving the flat fluorescent lamp; an optical sheet disposed between the upper case and the flat fluorescent lamp; and an inverter for generating the discharge voltage.

Preferably, a distance between the outermost discharge channel and the optical sheet is larger than a distance between the central discharge channel and the optical sheet.

Preferably, the outermost discharge channel has a larger height than the central discharge channel.

### Brief Description of the Drawings

The above objects and other advantages of the present invention will become more apparent by describing in detail preferred embodiments thereof with reference to the accompanying drawings, in which:
Fig. 1 is a perspective view illustrating a conventional flat fluorescent lamp;
Fig. 2 is a cross-sectional view illustrating the flat fluorescent lamp of Fig. 1;
Fig. 3 is a partially sectioned perspective view illustrating another conventional flat fluorescent lamp;
Fig. 4 is a cross-sectional view illustrating the flat fluorescent lamp of Fig. 3;
Fig. 5 is a perspective view illustrating a flat fluorescent lamp according to a first embodiment of the present invention;
Fig. 6 is a cross-sectional view illustrating the flat fluorescent lamp of Fig. 5;
Fig. 7 is a perspective view illustrating a flat fluorescent lamp according to a second embodiment of the present invention;
Fig. 8 is a cross-sectional view illustrating the flat fluorescent lamp of Fig. 7;
Fig. 9 is a top plan view illustrating a flat fluorescent lamp according to a third embodiment of the present invention;
Fig. 10 is a top plan view illustrating a flat fluorescent lamp according to a fourth embodiment of the present invention;
Fig. 11 is a top plan view illustrating a flat fluorescent lamp according to a fifth embodiment of the present invention;
Fig. 12 is a exploded perspective view illustrating a backlight unit according to a embodiment of the present invention; and
Fig. 13 is a cross-sectional view illustrating a backlight unit of Fig. 12.

### Detailed Description of the Preferred Embodiments

### Flat fluorescent lamp according to a first embodiment

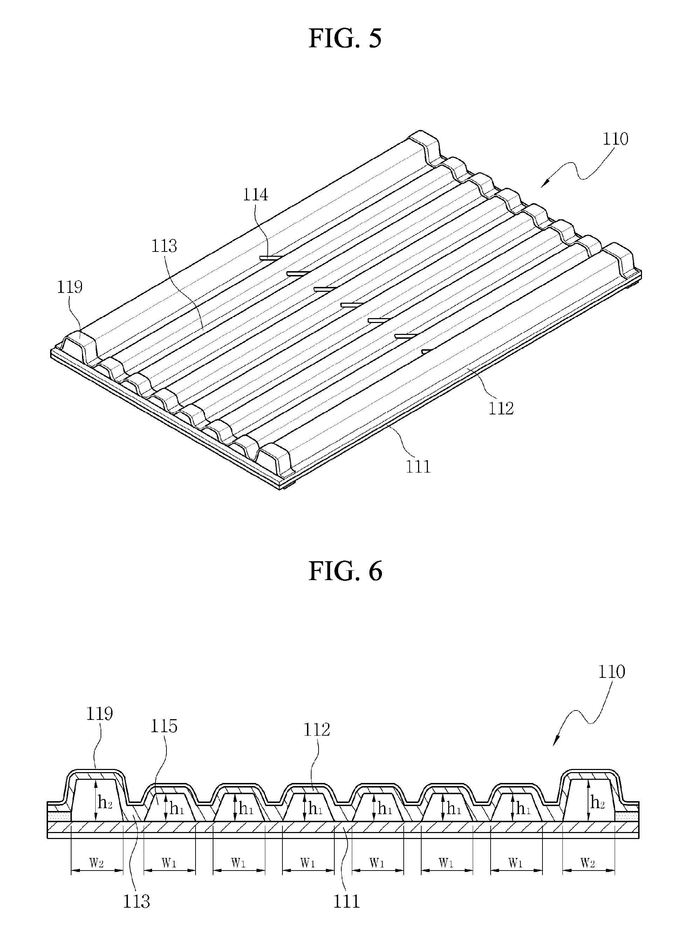

Fig. 5 is a perspective view illustrating a flat fluorescent lamp 110 according to a first embodiment of the present invention. Fig. 6 is a cross-sectional view illustrating the flat fluorescent lamp of Fig. 5.

As shown in Fig. 5, the flat fluorescent lamp 110 includes a main body and electrodes 119.

The main body has an inner space into which discharge gas is provided. The inner space is partitioned into a plurality of discharge channels. A cross-section of the discharge channel 115 has a shape of trapezoid.

The electrode 119 extends in a second direction which intersects a first direction in which the discharge channels 115 extend. The electrode 119 applies discharge voltage into the discharge channels 115.

The main body includes two panels 111, 112 disposed at a lower place and an upper place respectively. The panels 111, 112 are made of glass which transmits visible ray but blocks ultraviolet ray.

The panel 112 disposed at the upper place has barriers 113 integrally formed thereon. The barriers 113 are arranged parallel with one another. Therefore, the discharge channels 115 are also arranged parallel with one another.

Mercury gas, argon gas, neon gas, xenon gas, etc can be used as the discharge gas.

The outermost discharge channel disposed at an outermost place among a plurality of the discharge channels 115 has a larger volume than the other discharge channels including the central discharge channel disposed at a central place. More specifically, a width (w2) and a height (h2) of the outermost discharge channel are larger than a width (w1) and a height (h1) of the other discharge channels. Accordingly, a cross-sectional area of the outermost discharge channel is larger than that of the other discharge channels.

Therefore, the outermost discharge channel can be provided with more amount of the discharge gas in proportion to the volume thereof. Accordingly, it is possible to increase luminance of the outermost discharge channel and thus to improve overall luminance uniformity of the flat fluorescent lamp 110.

In addition, an outermost part of the electrode 119 at the outermost discharge channel has a larger area than a central part of the electrode 119 at the central discharge channel. According to another embodiment, it is possible to increase a length in the first direction of the outermost part of the electrode 119, which still more increases the area of the outermost part of the electrode 119.

The expansion of the outermost discharge channel together with the outermost part of the electrode 119 still more increases luminance of the outermost discharge channel and as a result still more improves overall luminance uniformity.

The electrode 119 is made of a material with good conductivity, for example, cooper, nickel, silver, gold, aluminum, chrome, etc. The electrode 119 is provided in the form of tape, spray, powder, etc.

Preferably, both discharge channels disposed at the outermost places are formed symmetrically for luminance uniformity.

An unexplained reference numeral 114 represents passages.

### Flat fluorescent lamp according to a second embodiment

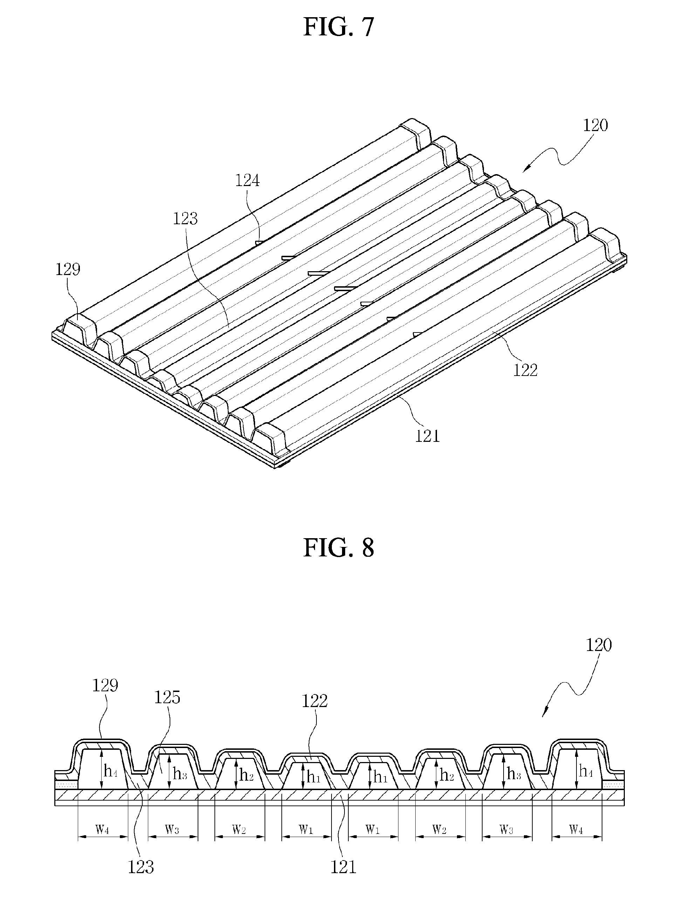

Fig. 7 is a perspective view illustrating a flat fluorescent lamp 120 according to a second embodiment of the present invention. Fig. 8 is a cross-sectional view illustrating the flat fluorescent lamp of Fig. 7.

As shown in Fig. 7, as discharge channels 125 go from a central place to an outermost place, a volume of each discharge channel 125 increases continuously. (w1 < w2 < w3 < w4, h1<h2<h3<h4)

Accordingly, as an electrode goes from a central part to an outermost part, an area of each part of the electrode 129 at each discharge channel also increases continuously.

Unexplained reference numerals 121, 122, 123, and 124 represent a panel, a panel, barriers, and passages respectively.

### Flat fluorescent lamp according to a third embodiment

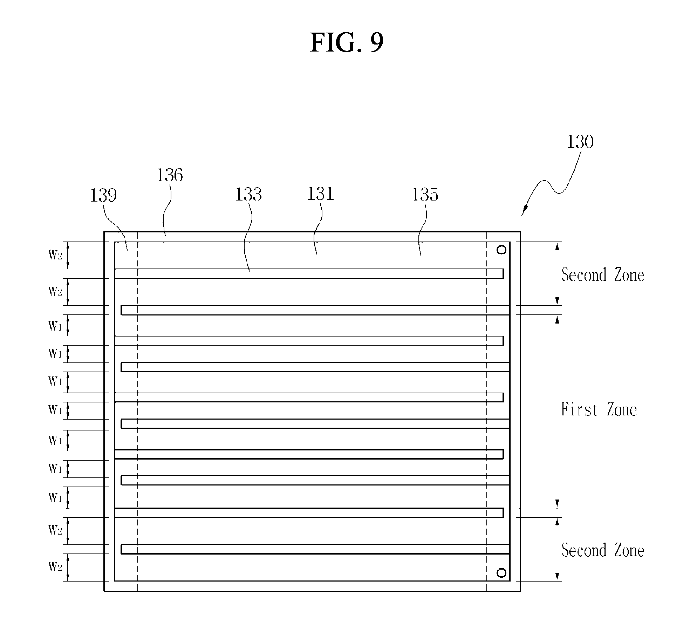

Fig. 9 is a top plan view illustrating a flat fluorescent lamp 130 according to a third embodiment of the present invention. In Figs. 9 to 11, a panel disposed at an upper place is not shown.

Differently from the lamps 110, 120 in Figs. 5 to 8, the flat fluorescent lamp 130 in Fig. 9 is a lamp with barriers which are provided independently from a panel.

The flat fluorescent lamp 130 includes a main body and electrodes 139. The main body includes two panels (a panel 131 disposed at a lower place but a panel disposed at an upper place), barriers 133, and a sealing member 136.

The two panels are disposed at the lower place and the upper place respectively facing each other. The sealing member 136 is formed between the two panels along peripheries of the panels to form an inner space of the main body.

Barriers 133 are arranged parallel with one another in a serpentine formation.

As discharge channels 135 go from a central place to an outermost place, a volume of each discharge channel 135 increases stepwise. Accordingly, as an electrode 139 goes from a central part to an outermost part, an area of each part of the electrode 139 at each discharge channel also increases stepwise.

More specifically, the main body has a first zone at a middle place and a second zone at two outer places. Volumes of the discharge channels disposed in the second zone are larger than those of the discharge channels disposed in the first zone.

A total volume of the discharge channels disposed in the first zone is 80 - 85% of a total volume of the inner space of the main body, and a total volume of the discharge channels disposed in the second zone is 15 - 20% of the total volume of the inner space of the main body.

For this, the discharge channels 135 are formed such that w2 is larger than w1 by 15 - 30%. For example, when the number of barriers is twenty five, w1 is 10mm and w2 is 12mm.

### Flat fluorescent lamp according to a fourth embodiment

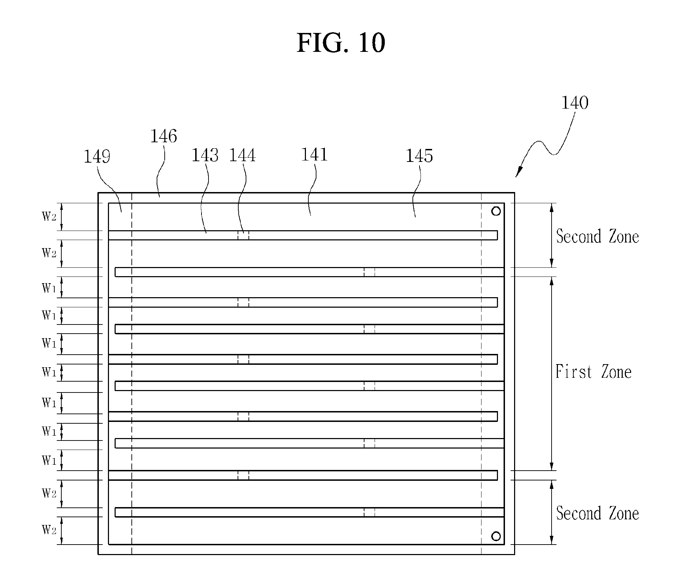

Fig. 10 is a top plan view illustrating a flat fluorescent lamp 140 according to a fourth embodiment of the present invention.

Differently from the lamp 130 of Fig. 9, barriers 143 do not contact with a sealing member 146 but instead passage holes 144 are formed at the barriers 143.

Similarly to the lamp of Fig. 9, a volume of each discharge channel 145 and an area of each part of an electrode 149 at each discharge channel 145 increase stepwise as they go from a central place to an outermost place.

An unexplained reference numeral 141 represent a panel disposed at a lower place.

### Flat fluorescent lamp according to a fifth embodiment

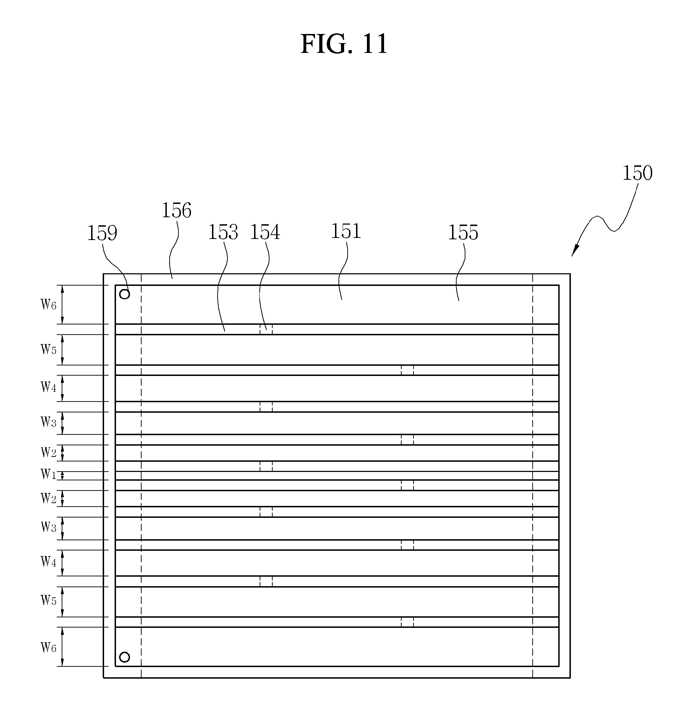

Fig. 11 is a top plan view illustrating a flat fluorescent lamp 150 according to a fifth embodiment of the present invention.

Differently from the lamp 140 of Fig. 10, a width of each discharge channel 155 and an area of each part of an electrode 159 at each discharge channel 155 increases stepwise as they go from a central place to an outermost place. (w1 < w2 < w3 < w4 < w5 < w6)

Unexplained reference numerals 151, 153, 154, and 156 represent a panel disposed at a lower place, barriers, passage holes, and a sealing member respectively.

### Backlight unit according to one embodiment

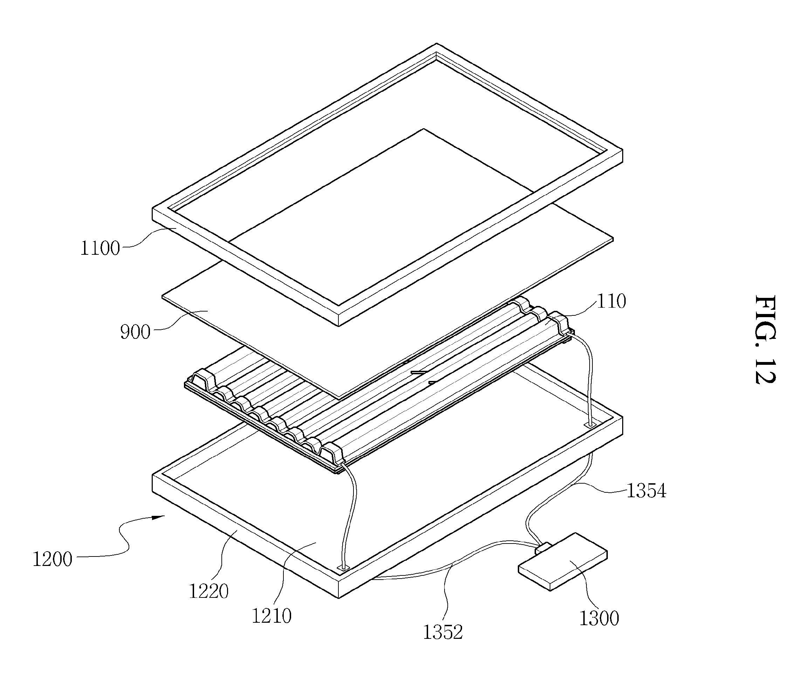

Fig. 12 an exploded perspective view illustrating a backlight unit according to an embodiment of the present invention.

Referring to Fig. 12, the backlight unit includes the flat fluorescent lamp 110 of Fig. 5, an upper case 1100, a lower case 1200, an optical sheet 900, and an inverter 1300.

One of the lamps described in the above embodiments may be used as a light source for the backlight unit but in this embodiment, the lamp 110 according to the first embodiment is selected for the illustrative purpose.

The lower case 1200 comprises a bottom 1210 and an edge wall 1220 elongated from a periphery of the bottom 1210 for receiving the lamp 110. The lamp 110 is received in the lower case 1200.

The inverter 1300 generating discharge voltage for operating the lamp 110 is disposed under the lower case 1200. The discharge voltage generated by the inverter 1300 is transmitted via a first line 1352 and a second line 1354 to the electrodes of the lamp 110.

The optical sheet 900 may include a diffusion sheet (not shown) for diffusing light emitted from the flat fluorescent lamp 110 and a prism sheet (not shown) for collimating the diffused light.

The upper case 1100 and the lower case 1200 are coupled with each other to fix the flat fluorescent lamp 110 and the optical sheet 900. Also, the upper case 1100 prevents the lamp 110 from being separated from the lower case 1200.

An LCD panel (not shown) may be disposed above the upper case 1100.

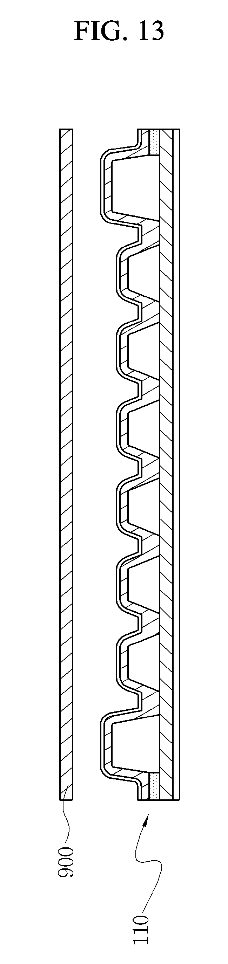

Fig. 13 is a cross-sectional view illustrating the backlight unit of Fig. 12.

As shown in Fig. 13, the optical sheet 900 is disposed at a distance from the flat fluorescent lamp 110. Preferably, a distance from the outermost discharge channel to the optical sheet 900 is smaller than a distance from the central discharge channel to the optical sheet 900. Accordingly, luminance of the outermost discharge channel increases and overall luminance uniformity improves.

The present invention has been described above with reference to the aforementioned embodiments. It is evident, however, that many alternative modifications and variations will be apparent to those skilled in the art in light of the foregoing description. Accordingly, the present invention embraces all such alternative modifications and variations as fall within the spirit and scope of the appended claims.

## Claims

1. A flat fluorescent lamp comprising:
a main body having an inner space into which discharge gas is provided, the inner space being partitioned into a plurality of discharge channels, and the discharge channels extending in a first direction, and
an electrode for applying discharge voltage to each discharge channel, the electrode extending in a second direction which intersects the first direction,
the outermost discharge channel disposed at an outermost place among a plurality of the discharge channels having a larger volume than the central discharge channel disposed at a central place among a plurality of the discharge channels.

2. The flat fluorescent lamp of claim 1,
wherein an outermost part of the electrode at the outermost discharge channel has a larger area than a central part of the electrode at the central discharge channel.

3. The flat fluorescent lamp of claim 1,
wherein as the discharge channels go from the central place to the outermost place, a volume of each discharge channel increases continuously,

4. The flat fluorescent lamp of claim 3,
wherein an outermost part of the electrode at the outermost discharge channel has a larger area than a central part of the electrode at the central discharge channel, and
as the electrode goes from the central part to the outermost part, an area of each part of the electrode at each discharge channel increases continuously.

5. The flat fluorescent lamp of claim 1,
wherein as the discharge channels go from the central place to the outermost place, a volume of each discharge channel increases stepwise.

6. The flat fluorescent lamp of claim 5,
wherein an outermost part of the electrode at the outermost discharge channel has a larger area than a central part of the electrode at the central discharge channel, and
as the electrode goes from the central part to the outermost part, an area of each part of the electrode at each discharge channel increases stepwise.

7. The flat fluorescent lamp of claim 5,
wherein the main body has a first zone at a middle place and a second zone at two outer places,
volumes of the discharge channels disposed in the first zone are identical to one another, volumes of the discharge channels disposed in the second zone are identical to one another and are larger than the volumes of the discharge channels disposed in the first zone,
a total volume of the discharge channels disposed in the first zone is 80 - 85% of a total volume of the inner space of the main body, and a total volume of the discharge channels disposed in the second zone is 15 - 20% of the total volume of the inner space of the main body.

8. The flat fluorescent lamp of claim 1,
wherein the outermost discharge channel has a larger cross-sectional area than the central discharge channel.

9. The flat fluorescent lamp of claim 8,
wherein the outermost discharge channel has a larger width than the central discharge channel.

10. The flat fluorescent lamp of claim 9,
wherein the outermost discharge channel has a larger height than the central discharge channel.

11. The flat fluorescent lamp of one of claims 1 to 10,
wherein the main body includes two panels disposed at an upper place and a lower place respectively, and barriers partitioning the inner space of the main body into a plurality of the discharge channels.

12. The flat fluorescent lamp of claim 11,
wherein the barriers are integrally formed on the panel.

13. The flat fluorescent lamp of claim 1,
wherein the main body includes a sealing member which is formed between the two panels along peripheries of the panels to form the inner space.

14. A backlight unit comprising:
a flat fluorescent lamp including
a main body having an inner space into which discharge gas is provided, the inner space being partitioned into a plurality of discharge channels, and the discharge channels extending in a first direction, and
an electrode for applying discharge voltage to each discharge channel, the electrode extending in a second direction which intersects the first direction,
the outermost discharge channel disposed at an outermost place among a plurality of the discharge channels having a larger volume than the central discharge channel disposed at a central place among a plurality of the discharge channels;
an upper case and a lower case for receiving the flat fluorescent lamp;
an optical sheet disposed between the upper case and the flat fluorescent lamp; and
an inverter for generating the discharge voltage.

15. The backlight unit of claim 14,
wherein a distance between the outermost discharge channel and the optical sheet is larger than a distance between the central discharge channel and the optical sheet.

16. The backlight unit of claim 15,
wherein the outermost discharge channel has a larger height than the central discharge channel.
